# EUROPEAN PATENT APPLICATION

(11) **EP 3 981 589 A1**
(43) Date of publication of application: **13.04.2022**
(21) Application number: 19939814.0
(22) Date of filing: 17.09.2019
(51) Int. Cl.: B32B 7/02, B32B 5/18, B32B 27/32, B32B 27/36, B32B 37/00, C08J 11/04, C08J 9/04, B65D 65/40

(54) **MULTI-LAYERED COMPOSITION BASED ON FOAMED RECYCLED POLYETHYLENE TEREPHTHALATE AND METHOD FOR PRODUCING SAME**

(30) Priority: 29.07.2019 RU 2019123943
(71) Applicant: Forpet S.A.R.L., 1511 Luxembourg (LU)
(72) Inventor: RASTORGUEV, Dmitrii Sergeevich, Moscow, 123154 (RU); NIKITENKO, Sergei Sergeevich, Khimki, 141406 (RU); TSIRKULEV, Mikhail Valerevich, Moscow, 109544 (RU)
(74) Representative: Spengler, Robert
(86) International application number: PCT/RU2019/000644
(87) International publication number: WO 2021/020988

(57) **Abstract**

The invention relates to a multi-layered structure intended for producing a packaging article for storage purposes under environmentally-friendly conditions and to a method for producing said structure. The problem which the inventor of the present novel multi-layered composition based on foamed recycled polyethylene terephthalate seeks to solve is that of overcoming the defects of the known prior art. The technical result lies in the creation of a multi-layered composition based on foamed recycled polyethylene terephthalate (obtained from polyethylene terephthalate waste), which is easy to produce and fit for use. The essence of the invention is that a multi-layered composition based on foamed recycled polyethylene terephthalate comprises a printed layer, a layer of foamed recycled polyethylene terephthalate having a density of from 100 kg/m³ to 900 kg/m³ and an intrinsic viscosity of from 0.5 dl/g to 1.0 dl/g, and also a layer of polyethylene or a polyethylene copolymer, or a polyethylene terephthalate copolymer. A method for producing a multi-layered composition based on foamed recycled polyethylene terephthalate consists in washing and cleaning polyethylene terephthalate waste, then grinding same into fractions having a size of from 1 mm to 20 mm and separating it according to polymer types and colour, followed by melting the polyethylene terephthalate and subsequently extruding the polyethylene terephthalate melt, then carrying out the polycondensation of liquid phase polyethylene terephthalate under a vacuum to produce granulated polyethylene terephthalate having an intrinsic viscosity of from 0.5 dl/g to 1.0 dl/g, then extruding the granulated polyethylene terephthalate while simultaneously supplying nitrogen and/or carbon dioxide, foaming the polyethylene terephthalate melt, subsequently cooling the foamed recycled polyethylene terephthalate, calendering it to a thickness of from 200 µm to 1000 µm and winding it into a roll. Using an extrusion lamination line, a roll of foamed recycled polyethylene terephthalate layer or a roll of foamed recycled polyethylene terephthalate layer having a co-extruded or cast extruded layer of non-foamed recycled polyethylene terephthalate is mounted on a primary unwind station, and at least one roll of polyethylene or polyethylene copolymer layer and a roll of aluminium foil layer are mounted on additional stations, then the polyethylene or polyethylene copolymer layer and the aluminium foil layer are applied to the foamed recycled polyethylene terephthalate layer or to the foamed recycled polyethylene terephthalate layer having a coextruded layer of non-foamed recycled polyethylene terephthalate, and the resulting material is temperature controlled on calender rolls, whereupon a printed layer is applied to the outer surface, then the material is scored and cut into individual sheets.

## Description

### TECHNICAL FIELD OF THE INVENTION

The invention relates to a multi-layered structure intended for producing a packaging product for storage purposes in ambient conditions, and to a method for producing the structure.

### BACKGROUND OF THE INVENTION

The prior art discloses solutions for a multi-layered packaging product, which consist of layers of cardboard (mandatory layer), polyethylene (mandatory layers) and aluminum foil (optional layer) and produced mainly by means of extrusion lamination. These solutions includes but not limited to packaging products developed by ELOPAK corporate group (see http://www.elopak.com/products-and-services/board) and packaging products developed by Tetra Pak corporate group (see https://www.tetrapak.com/en/packaging/materials). The disadvantages of these types of packaging materials are as follows: the impossibility of re-using packaging wastes in the same packaging products; the complexity of recycling packaging products due to the mandatory layers of polyethylene comprised therein; the complexity of recycling packaging products comprising a layer of aluminum - it is usually incineration; the long natural decomposition of recycled packaging products due to the mandatory layers of polyethylene or polyethylene copolymers comprised therein; the use of cardboard results in destroying the world's global forest resources.

RU 2183557 discloses a packaging product made of a multi-layered composition. According to RU 2183557, a material intended for producing beverage and food containers includes a substantially amorphous expanded sheet made of copolyethylene terephthalate, comprising 2-20 mol. % of units formed by isophthalic acid and/or naphthalenedicarboxylic acids, having a density of less than 700 kg/m³, a thickness of 0.2-3 mm and such a crystallization rate that, when it is heated at 120°C for 5 minutes, a degree of crystallinity does not reach values higher than 15%. The disadvantages of this material include its low quality, and the complexity of its production due to the impossibility of uniform expansion of both primary and secondary polyethylene terephthalate and polyethylene terephthalate copolymers, since a recycling method disclosed in RU 2183557 - i.e. solid-state polycondensation of polyethylene terephthalate and polyethylene terephthalate copolymers - does not result in a stable intrinsic bulk viscosity (with a spread of values of more than 0.01 dl/g) and makes the whole expansion process unstable at subsequent recycling steps. More specifically, during the expansion process, different-sized bubbles having different thicknesses of partitions and different strength characteristics are obtained, and the resulting material becomes heterogeneous in terms of physical and mechanical properties, which does not provide the possibility of its use in industrial recycling.

### SUMMARY OF THE INVENTION

The objective set by the author of a novel multi-layered composition based on expanded recycled polyethylene terephthalate is to eliminate the disadvantages of the prior art analogues. The technical result lies in the creation of an easy-to-use and utilizable multi-layered composition based on expanded virgin and/or recycled (obtained from a polyethylene terephthalate waste) polyethylene terephthalate. This technical result is achieved by the whole set of essential features.

The essence of the invention is that a multi-layered composition based on expanded recycled polyethylene terephthalate comprises a printed layer, a layer of expanded recycled polyethylene terephthalate having a density ranging from 100 kg/m³ to 900 kg/m³ and an intrinsic viscosity ranging from 0.5 dl/g to 1.0 dl/g, as well as a layer of polyethylene or polyethylene copolymer, or polyethylene terephthalate copolymer. The layer of expanded recycled polyethylene terephthalate has a thickness ranging from 200 µm to 1000 µm. The layer of polyethylene or polyethylene copolymer, or polyethylene terephthalate copolymer has a thickness ranging from 10 µm to 40 µm. At the same time, instead of the layer of expanded recycled polyethylene terephthalate, a coextrusion or extrusion-cast layer of non-expanded recycled polyethylene terephthalate in combination with the layer of expanded recycled polyethylene terephthalate may be used. Furthermore, such a layer has a thickness ranging from 20 µm to 100 µm. At the same time, a layer of polyethylene or polyethylene copolymer is added between the printed layer and the layer of expanded recycled polyethylene terephthalate. Such an added layer has a thickness ranging from 5 µm to 15 µm. Additionally, a layer of aluminum foil is added after the layer of expanded recycled polyethylene terephthalate. Moreover, the added layer of aluminum foil has a thickness ranging from 4 µm to 9 µm. A method for producing the multi-layered composition based on expanded recycled polyethylene terephthalate is performed as follows. A polyethylene terephthalate waste is washed and purified, then crushed into fractions having a size ranging from 1 mm to 20 mm and separated according to polymer types and color. The polyethylene terephthalate is further melted, and a polyethylene terephthalate melt is subsequently extruded. The solid-state polycondensation of the polyethylene terephthalate is then performed under vacuum to obtain granular polyethylene terephthalate having an intrinsic viscosity ranging from 0.5 dl/g to 1.0 dl/g. The granular polyethylene terephthalate is then extruded, while simultaneously supplying nitrogen and/or carbon dioxide. The polyethylene terephthalate melt is subsequently expanded, whereupon the expanded recycled polyethylene terephthalate is cooled, calendered to a thickness ranging from 200 µm to 1000 µm and wound into a roll. Next, by using an extrusion lamination line, the roll of the layer of expanded recycled polyethylene terephthalate or the roll of the layer of expanded recycled polyethylene terephthalate in combination with the coextrusion or extrusion-cast layer of non-expanded recycled polyethylene terephthalate is installed on a primary unwinding station. Furthermore, at least one roll of the layer of polyethylene or polyethylene copolymer and the layer of aluminum foil are installed on additional unwinding stations. Then, the layer of polyethylene or polyethylene copolymer and the layer of aluminum foil are applied on the layer of expanded recycled polyethylene terephthalate layer or on the layer of expanded recycled polyethylene terephthalate in combination with the coextrusion layer of non-expanded recycled polyethylene terephthalate. After that, the resulting material is temperature-controlled on calender rolls, whereupon the printed layer is applied on its outer surface, and the material is then scored and cut into individual sheets. At the same time, the printed layer is applied by means of rotogravure or offset or flexographic printing, or any combination thereof. In the meantime, bottles, fibers, filaments, sprues, flakes are used as the polyethylene terephthalate waste.

### BRIEF DESCRIPTION OF THE DRAWINGS

The invention is explained by means of the drawings, in which:

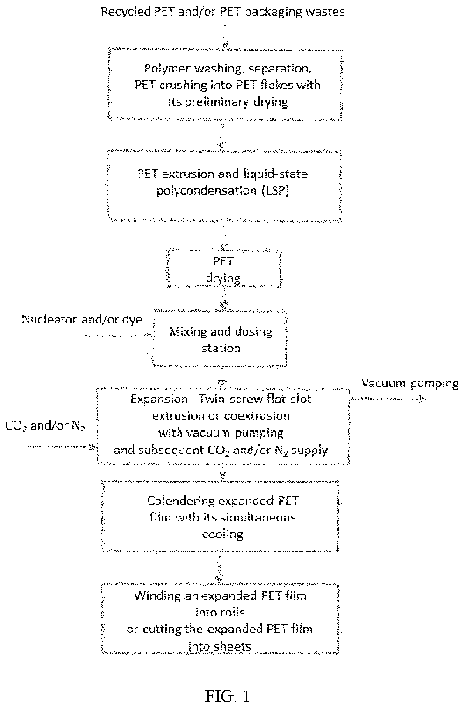

FIG. 1 schematically shows a process of producing an expanded recycled polyethylene terephthalate (PET) film/sheet based on PET packaging wastes and/or recycled PET (bottles, fibers, filaments, sprues, PET flakes) by using a PET liquid-state polycondensation method;
FIG. 2 shows a PET liquid-state polycondensation process;
FIG. 3 shows a structure of expanded recycled PET;
FIG. 4 shows a structure of expanded recycled PET having a scoring;
FIG. 5 shows a structure of expanded recycled PET having a scoring and a coextrusion or extrusion-cast layer of non-expanded recycled PET;
FIG. 6 schematically shows the claimed multi-layered composition;
FIG. 7 schematically shows an embodiment of the claimed multi-layered composition comprising the coextrusion or extrusion-cast layer of non-expanded recycled PET;
FIG. 8 schematically shows an embodiment of the claimed multi-layered composition comprising an additional layer of polyethylene or polyethylene copolymer;
FIG. 9 schematically shows an embodiment of the claimed multi-layered composition comprising the additional layer of polyethylene or polyethylene copolymer and a layer of aluminum foil;
FIG. 10 schematically shows an embodiment of the claimed multi-layered composition comprising the additional layer of polyethylene or polyethylene copolymer, the layer of aluminum foil, and the coextrusion or extrusion-cast layer of non-expanded recycled PET;
FIG. 11 schematically shows an embodiment of the claimed multi-layered composition comprising additional layers of polyethylene or polyethylene copolymer and the layer of aluminum foil.

### DETAILED DESCRIPTION OF THE INVENTION

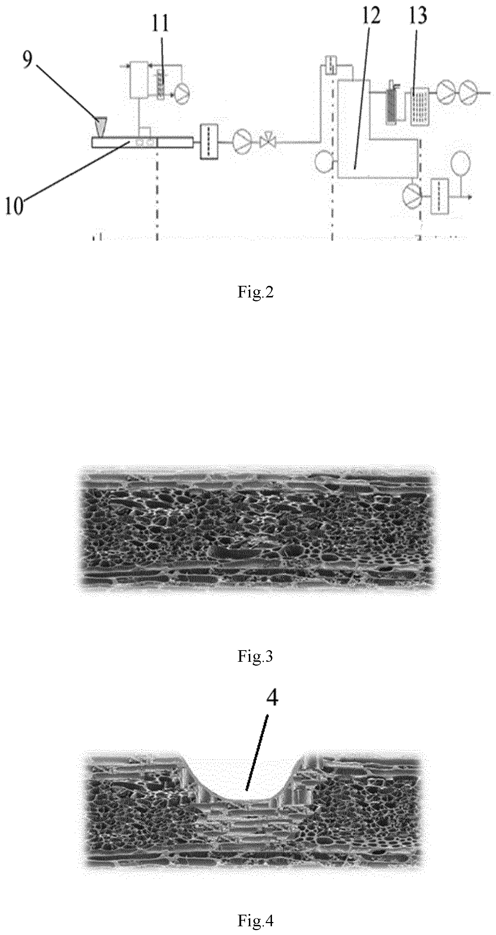

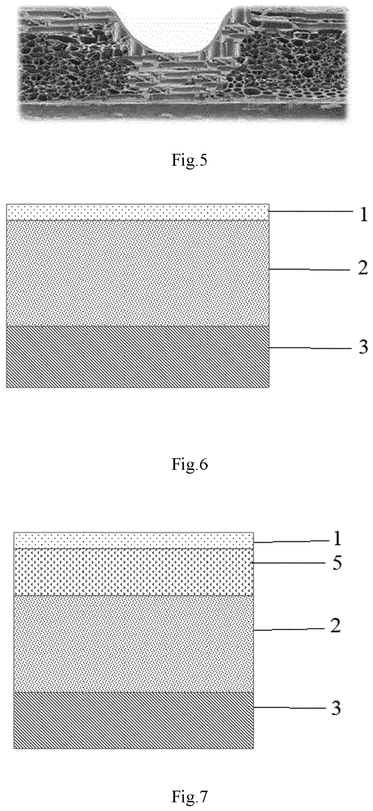

A multi-layered composition based on expanded recycled (obtained from a polyethylene terephthalate waste) polyethylene terephthalate (shown in FIG. 6) comprises a printed layer 1, a layer 2 of expanded recycled polyethylene terephthalate, a main layer 3 of polyethylene or polyethylene copolymer, or polyethylene terephthalate copolymer. The printed layer 1 is an information-carrying layer applied on the outside of the multilayer composition. The printed layer 1 is configured to accommodate various kinds of consumer-intended information and images. The printed layer 1 is made by using rotogravure printing or offset printing, or flexographic printing, or any combination thereof, and applied on the layer 2 of expanded recycled polyethylene terephthalate. The layer 2 of expanded recycled polyethylene terephthalate serves as a main supporting carrier layer and acts as a replacement for a carrier layer of cardboard and/or paper. Due to its cellular structure, the layer 2 of expanded recycled polyethylene terephthalate allows one to perform the operation of applying a rectilinear groove - scoring 4 (as shown in FIG. 4). The scoring 4 retains its shape due to the destruction of a part of the partitions between the voids formed during polyethylene terephthalate expansion. The layer 2 of expanded recycled polyethylene terephthalate retains a sufficient strength to withstand repeated bending-unbending cycles in the place of the scoring 4. The layer 2 of expanded recycled polyethylene terephthalate has a density ranging from 100 kg/m³ to 900 kg/m³ and an intrinsic viscosity (IV) ranging from 0.5 dl/g (deciliters/gram) to 1.0 dl/g. An intrinsic viscosity value of a polymer solution depends on polymer and solvent types and increases as a molecular weight of linear macromolecules increases. The intrinsic viscosity, also known as a limiting viscosity number, is a value that is determined by a relative change in the viscosity of a solution when a polymer is added. The intrinsic viscosity is determined by extrapolating viscometry data to zero polymer concentration. The units of measurement of the intrinsic viscosity are inversely related to the units of measurement of a polymer concentration in a solution - cm³/g (isn' it dl/g?). The intrinsic viscosity is considered for an extremely dilute solution, in which the complete absence of interaction of polymer macromolecules with each other is assumed, and, in physical sense, is a measure of additional energy losses during a solution flow that are caused by the rotation and viscous-elastic deformations of the macromolecules in the flow. The intrinsic viscosity value of a polymer solution depends on polymer and solvent types and increases as the molecular weight of the linear macromolecules increases. The layer of expanded recycled polyethylene terephthalate has a thickness (shown in FIG. 5) ranging from 200 µm to 1000 µm. When assembling a packaging product, the main layer 3 of polyethylene or polyethylene copolymer, or polyethylene terephthalate copolymer serves as a welding layer and is connected to the layer 2 of expanded recycled polyethylene terephthalate due to a melt temperature and surface tensions of the layers. The main layer 3 of polyethylene or polyethylene copolymer, or polyethylene terephthalate copolymers has a thickness ranging from 10 µm to 40 µm. The proposed multi-layered compositions used as the main carrier layer instead of cardboard and/or paper comprise the layer 2 of recycled polyethylene terephthalate. The layer 2 of expanded recycled polyethylene terephthalate is obtained from a PET waste by performing several recycling stages: - washing, purifying the PET waste; - crushing, separating the crushed PET waste according to polymer types and colors; - extruding a polyethylene terephthalate melt; - performing PET liquid-state polycondensation. The PET liquid-state polycondensation is based on the inherent ability of PET to condense in a molten state under vacuum. The condensation leads to an increase in the intrinsic viscosity. High-efficiency vacuum effectively removes harmful chemical impurities from the material, making it possible for the recycled material to be used for 100% safe contact with food products. As the molten PET enters a vertical portion of P:REACT (an LSP reactor), filaments are produced, which form a corresponding surface in volumetric relation. The material is then collected in a horizontal drum and slowly moved forward. The condensation process begins immediately after the production of the filaments and continues until the PET leaves the LSP reactor. An increase in the intrinsic viscosity is controlled by the residence time and degree of vacuum of the molten PET in the LSP reactor, and therefore may be set to a desired level. Parameter settings allow a control unit to maintain a predetermined intrinsic viscosity level within a narrow tolerance range. The process of removing impurities is very effective as it is performed in the liquid state of PET. Not only the purification efficiency of the material that exceeds the limits set by food industry standards is provided, but also lubricants are effectively removed from the fibers during the purification process. An increase in the intrinsic viscosity may be measured at a level of about 0.01 dl/g per minute. The continuous operation of the LSP reactor provides a narrow intrinsic viscosity range of a granulate, which is suitable for high-end applications, such as fiber spinning or the production of sheets by extrusion. Fluctuations in the intrinsic viscosity during the mass production are simply ruled out. The separation of harmful impurities, such as lubricants or substances not intended for contact with food products, is performed under high-effective vacuum. The high removal rate of the impurities allows the LSP reactor to be utilized in a variety of applications, providing its high operational flexibility. The favorable conditions created in the LSP reactor (temperature/a melt surface-volume ratio/high-efficiency vacuum) allows the PET condensation process to be freely initiated. This leads to an increase in the intrinsic viscosity by about 0.01 dl/g per minute. Faster response times translate into faster achievement of required results and higher profitability.

In one embodiment (which is shown in FIG. 7), the multi-layered composition based on expanded recycled polyethylene terephthalate comprises: the printed layer 1; a coextrusion (CoEx) or extrusion-cast layer 5 of non-expanded recycled polyethylene terephthalate, which is combined with the layer 2 of expanded recycled polyethylene terephthalate due to the partial surface mixing of the layers; the layer of expanded recycled polyethylene terephthalate 2; the layer 3 of polyethylene or polyethylene copolymer, or polyethylene terephthalate copolymer. This embodiment of the multi-layered composition based on expanded recycled polyethylene terephthalate facilitates the application of a high-quality multicolor print thereon. Moreover, the coextrusion or extrusion-cast layer 5 of non-expanded polyethylene terephthalate has a thickness ranging from 20 µm to 100 µm. These parameters are the most optimal and are determined empirically. An increase in the thickness of the coextrusion (CoEx) or extrusion-cast layer 5 of non-expanded recycled polyethylene terephthalate increases costs, while a decrease in its thickness deteriorates the quality of the print because the structure of the layer 2 of expanded recycled polyethylene terephthalate begins to come through the coextrusion (CoEx) or extrusion-cast layer 5 of non-expanded recycled polyethylene terephthalate.

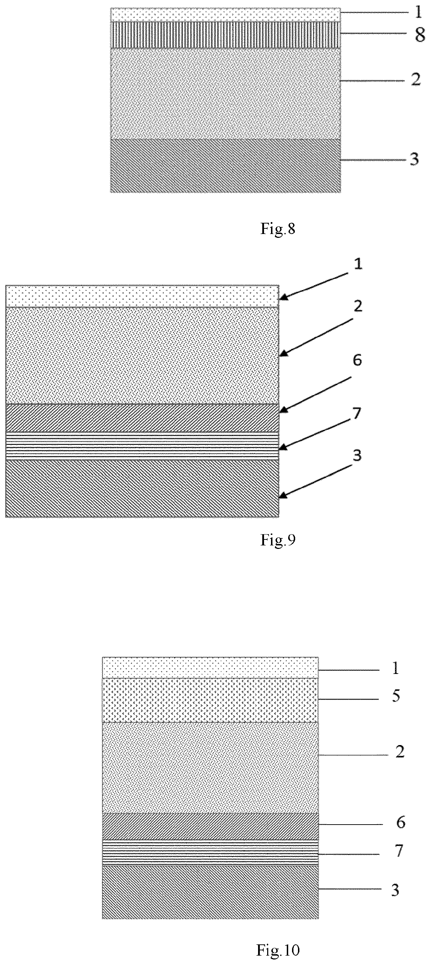

In one other embodiment (which is shown in FIG. 8), the multi-layered composition based on expanded recycled polyethylene terephthalate comprises: the printed layer 1; an additional layer 8 of polyethylene or polyethylene copolymer which is applied by an extrusion-casting method and combined with the layer 2 of expanded recycled polyethylene terephthalate due to the melt temperature and surface tensions of the layers; the layer 2 of expanded recycled polyethylene terephthalate; the main layer 3 of polyethylene or polyethylene copolymer, or polyethylene terephthalate copolymer. The additional layer 8 of polyethylene is provided on the outside and acts as a layer for carrying a print made by any of the above-indicated methods. This embodiment of the multi-layered composition based on expanded recycled polyethylene terephthalate is characterized by its simplicity of implementation and possible cost reduction compared to the previous embodiment, but it cannot be fully recycled (shown in FIG. 7). Moreover, the additional layer 8 of polyethylene or polyethylene copolymer has a thickness ranging from 5 µm to 15 µm. These parameters are the most optimal and are determined empirically. An increase in the thickness of the additional layer 8 of polyethylene or polyethylene copolymer increases costs, while a decrease in its thickness deteriorates the quality of the print because the structure of the layer 2 of expanded recycled polyethylene terephthalate begins to come through the additional layer 8 of polyethylene or polyethylene copolymer.

In one other embodiment (which is shown in FIG. 9), the multi-layered composition based on expanded recycled polyethylene terephthalate comprises: the printed layer 1; the layer 2 of expanded recycled polyethylene terephthalate; a layer 7 of aluminum foil which is combined, on one side, with the layer 2 of expanded recycled polyethylene terephthalate and the additional layer 6 of polyethylene or polyethylene copolymer due to the melt temperature and surface tensions of the layers, and, on another side, with the main layer 3 of polyethylene or polyethylene copolymer, or polyethylene terephthalate copolymer due to the melt temperature and surface tensions of the layers. This embodiment of the multi-layered composition based on expanded recycled polyethylene terephthalate is characterized by high barrier properties of a packaging product. Moreover, the layer 4 of aluminum foil has a thickness ranging from 4 µm to 9 µm. These parameters are the most optimal and are determined empirically. An increase in the thickness of the layer 7 of aluminum foil increases the barrier properties of the packaging product, improves its physical and mechanical properties, but significantly increases its cost.

In one other embodiment (which is shown in FIG. 10), the multi-layered composition based on expanded recycled polyethylene terephthalate comprises: the printed layer 1; the coextrusion (CoEx) or extrusion-cast layer 5 of non-expanded polyethylene terephthalate; the layer 2 of expanded recycled polyethylene terephthalate; the additional layer 6 of polyethylene or polyethylene copolymer; the layer 7 of aluminum foil; the main layer 3 of polyethylene or polyethylene copolymer, or polyethylene terephthalate copolymer. Moreover, the coextrusion or extrusion-cast layer 5 of non-expanded polyethylene terephthalate has a thickness ranging from 20 µm to 100 µm. The additional layer 6 of polyethylene or polyethylene copolymer has a thickness ranging from 5 µm to 15 µm. The layer 4 of aluminum foil has a thickness ranging from 4 µm to 9 µm. These parameters are the most optimal and are determined empirically. This embodiment of the multi-layered composition based on expanded recycled polyethylene terephthalate retains the barrier properties of the packaging product and facilitates the application of a high-quality multicolor print thereon in comparison with the previous embodiment (which is shown in FIG. 9).

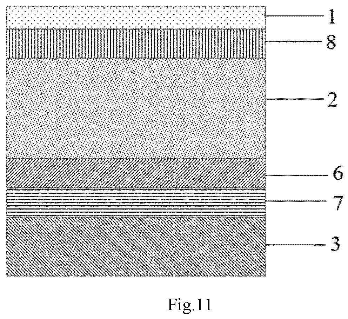

In one other embodiment (which is shown in FIG. 11), the multi-layered composition based on expanded recycled polyethylene terephthalate comprises: the printed layer 1; the additional layer 8 of polyethylene or polyethylene copolymer which is combined with the layer 2 of expanded recycled polyethylene terephthalate due to the melt temperature and surface tensions of the layers; the layer 2 of expanded secondary polyethylene terephthalate; the additional layer 6 of polyethylene or polyethylene copolymer; the layer 7 of aluminum foil; the main layer 3 of polyethylene or polyethylene copolymer. Moreover, the coextrusion or extrusion-cast layer 5 of non-expanded polyethylene terephthalate has a thickness ranging from 20 µm to 100 µm. The additional layer 6 of polyethylene or polyethylene copolymer and the additional layer 8 of polyethylene or polyethylene copolymer each has a thickness ranging from 5 µm to 15 µm. The layer 4 of aluminum foil has a thickness ranging from 4 µm to 9 µm. This embodiment of the multi-layered composition based on expanded recycled polyethylene terephthalate is analogous to the previous embodiment (which is shown in FIG. 11) but is characterized by that it cannot be fully recycled.

A method for producing the multi-layered composition based on polyethylene terephthalate is performed using a conventional extrusion lamination line that comprises: an unwinding station; a melt casting station; an extrusion lamination station; a printing station; a quality control station; a winding station. The method is performed as follows. At first, the layer 2 of expanded recycled polyethylene terephthalate is prepared. For this purpose, a polyethylene terephthalate waste 9 (bottles, fibers, filaments, sprues, polyethylene terephthalate flakes) are washed and purified from debris, labels, glue. Then, the polyethylene terephthalate waste is crushed to obtain fractions having a size from 1 mm to 20 mm and separated according to polymer types and color. Next, the separated polyethylene terephthalate waste is loaded into a hopper 10 and melted, and the polyethylene terephthalate melt is extruded on the extrusion line by using an extruder 10, while removing excess contaminants and moisture by means of vacuum pumps 11. After that, the liquid-state polycondensation of polyethylene terephthalate is performed in a reactor 12 under the action of vacuum pumps 13. The condensation leads to an increase in the intrinsic viscosity. High-efficiency vacuum effectively removes harmful chemical impurities from the material, making it possible for the recycled material to be used for 100% safe contact with food products. As the PET melt enters the vertical portion of the P:REACT (LSP reactor) 12, filaments are produced, which form a corresponding surface in volumetric relation. The material is then collected in a horizontal drum and slowly moved forward. The condensation process begins immediately after the production of the filaments and continues until the PET leaves the LSP reactor. An increase in the intrinsic viscosity is controlled by the residence time of the PET melt in the LSP reactor and the degree of vacuum in the LSP reactor and, therefore, may be set to a required level. Parameter settings allow a control unit to maintain a predetermined intrinsic viscosity level within a narrow tolerance range. The process of removing impurities is very effective as it is performed in the liquid state of polyethylene terephthalate. Not only the purification efficiency of the material that exceeds the limits set by food industry standards is provided, but also lubricants are effectively removed from the fibers during the purification process. An increase in the intrinsic viscosity may be measured at a level of about 0.01 dl/g per minute. The continuous operation of the LSP reactor provides a narrow intrinsic viscosity range of a granulate, which is suitable for high-end applications, such as fiber spinning or the production of sheets by extrusion. Fluctuations in the intrinsic viscosity during the mass production are simply ruled out. The separation of harmful impurities, such as lubricants or substances not intended for contact with food products, is performed under the vacuum pumps 13. The high removal rate of the impurities allows the LSP reactor to be utilized in a variety of applications, providing its high operational flexibility. The favorable conditions created in the LSP reactor (temperature/a melt surface-volume ratio/high-efficiency vacuum) allows the PET condensation process to be freely initiated. This leads to an increase in the intrinsic viscosity by about 0.01 dl/g per minute. Faster response times translate into faster achievement of required results and higher profitability. Polyethylene terephthalate granules are produced at the outlet of the LSP reactor. Then, the extrusion of the polyethylene terephthalate granules is performed, while simultaneously supplying nitrogen and/or carbon dioxide. In a connector in front of a die, in the die and at the outlet of the die, the polyethylene terephthalate melt is subjected to temperature- and pressure-controllable extrusion, whereupon the melt is fed from the die to calender rolls where it is cooled (temperature-controlled) and calendered to a thickness of 200 µm to 1000 µm. An additional station for extrusion-casting of either the polyethylene terephthalate melt 5 or the polyethylene or polyethylene copolymer melt 8 may be installed subsequently, and the repeated calendering, temperature control and winding of the film into rolls are performed. Next, the roll of the layer 2 of expanded recycled polyethylene terephthalate or the roll of the layer 2 of expanded recycled polyethylene terephthalate combined with the coextrusion or extrusion-cast layer 5 of non-expanded recycled polyethylene terephthalate or with the additional layer 8 of polyethylene or polyethylene copolymer is installed on the main unwinding station. Further, the roll of the main layer 3 of polyethylene or polyethylene copolymer is installed on additional unwinding stations. If required, the roll of the layer 7 of aluminum foil is also installed on additional unwinding stations. If required, the roll of the additional layer 8 of polyethylene or polyethylene copolymer is also installed on additional unwinding stations. Next, the layer 3 of polyethylene or polyethylene copolymer is applied on the layer 2 of expanded recycled polyethylene terephthalate or the layer 2 of expanded recycled polyethylene terephthalate combined with the coextrusion layer 5 of non-expanded recycled polyethylene terephthalate, and the resulting material is temperature-controlled on the calender rolls. After that, the printed layer is applied on the outer surface of the multi-layered composition based on expanded recycled polyethylene terephthalate by using rotogravure printing or offset printing, or flexographic printing, or any combination thereof. The resulting multi-layered composition is scored and cut into individual sheets.

### INDUSTRIAL APPLICABILITY

The claimed invention makes it possible to: recycle a layer of expanded recycled polyethylene terephthalate similarly to cardboard; perform scoring for subsequent folding along a scoring line; perform finishing operations (e.g., printing); perform extrusion lamination with polyethylene terephthalate, polyethylene and polyethylene copolymers and aluminum foil. The claimed invention makes it possible to produce a packaging product consisting of the main carrier layer of recycled polyethylene terephthalate and fully recycle the wasted packaging product based on the multi-layered composition comprising the main carrier layer of expanded polyethylene terephthalate by means of crushing, aluminum filtration (when aluminum is used), and subsequent liquid-state polycondensation of polyethylene terephthalate, thereby restoring the properties of polyethylene terephthalate to those of primary raw materials. The claimed invention makes it possible to recycle multi-layered compositions comprising the main carrier layer of expanded polyethylene terephthalate as many times as one sees fit. In most cases, the claimed invention allows one to produce multi-layered compositions comprising a layer of expanded polyethylene terephthalate having physical and mechanical characteristics better than those of similar multi-layered compositions based on cardboard and/or paper. The claimed invention is 5%-30% cheaper in cost than cardboard or paper, depending on cardboard or paper brands and depending on a required expansion coefficient, and depending on the intrinsic viscosity of polyethylene terephthalate.

## Claims

1. A multi-layered composition based on expanded recycled polyethylene terephthalate, **characterized in that** it is comprising:
a printed layer,
a layer of expanded recycled polyethylene terephthalate having a density of 100 kg/m³ to 900 kg/m³ and an intrinsic viscosity of 0.5 dl/g to 1.0 dl/g, and
a layer of polyethylene or polyethylene copolymer, or polyethylene terephthalate copolymer.

2. The multi-layered composition of claim 1, wherein the layer of expanded recycled polyethylene terephthalate has a thickness ranging from 200 µm to 1000 µm.

3. The multi-layered composition of claim 1, wherein the main layer of polyethylene or polyethylene copolymer, or polyethylene terephthalate copolymer has a thickness ranging from 10 µm to 40 µm.

4. The multi-layered composition of claim 1, wherein, instead of the layer of expanded recycled polyethylene terephthalate, a coextrusion or extrusion-cast layer of non-expanded recycled polyethylene terephthalate in combination with the layer of expanded recycled polyethylene terephthalate is used.

5. The multi-layered composition of claim 4, wherein the layer has a thickness ranging from 20 µm to 100 µm.

6. The multi-layered composition of claim 1, wherein a layer of polyethylene or polyethylene copolymer is added between the printed layer and the layer of expanded recycled polyethylene terephthalate.

7. The multi-layered composition of claim 6, wherein the added layer has a thickness ranging from 5 µm to 15 µm.

8. The multi-layered composition of claim 1, wherein a layer of aluminum foil is added after the layer of expanded recycled polyethylene terephthalate.

9. The multi-layered composition of claim 8, wherein the added layer of aluminum foil has a thickness ranging from 4 µm to 9 µm.

10. A method for producing a multi-layered composition based on expanded recycled polyethylene terephthalate, wherein
a polyethylene terephthalate (PET) waste is washed, purified, then crushed to fractions from 1 mm to 20 mm in size, and separated according to polymer types and color;
the PET is then melted, and a PET melt is extruded;
the PET is next subjected to liquid-state polycondensation under vacuum to obtain granular PET having an intrinsic viscosity of 0.5 dl/g to 1.0 dl/g;
the granular PET is further extruded, while simultaneously supplying nitrogen and/or carbon dioxide;
the PET melt is subsequently expanded, whereupon the expanded secondary PET is cooled and calendered to a thickness of 200 µm to 1000 µm and wound into a roll;
after that, by using an extrusion lamination line, a roll of a layer of expanded recycled polyethylene terephthalate or a roll of a layer of expanded recycled polyethylene terephthalate in combination with a coextrusion or extrusion-cast layer of non-expanded recycled polyethylene terephthalate is installed on a main unwinding station;
at least one roll of a layer of polyethylene or polyethylene copolymer and a layer of aluminum foil are next installed on additional unwinding stations;
the layer of polyethylene or polyethylene copolymer and the layer of aluminum foil are applied on the layer of expanded recycled polyethylene terephthalate or the layer of expanded recycled polyethylene terephthalate combined with the coextrusion layer of non-expanded recycled polyethylene terephthalate;
the resulting material is temperature-controlled on outer rolls;
a printed layer is applied on an outer surface and
the multi-layered composition is then scored and cut into individual sheets.

11. The method for producing the multi-layered composition of claim 10, wherein the printed layer is applied by using rotogravure or offset, or flexographic printing, or any combination thereof.

12. The method for producing the multi-layered composition of claim 10, wherein bottles, fibers, filaments, sprues, flakes are used as the polyethylene terephthalate waste.
